# EUROPÄISCHE PATENTSCHRIFT

(11) **EP 3 860 841 B1**
(45) Veröffentlichungstag und Bekanntmachung des Hinweises auf die Patenterteilung: **24.01.2024**
(21) Anmeldenummer: 19835363.3
(22) Anmeldetag: 13.12.2019
(51) Int. Cl.: B30B 15/00, B30B 5/06, G01N 21/64, B27N 3/24, B27N 3/02, B27N 3/04

(54) **KONTINUIERLICH BETREIBBARE PRESSE MIT VORRICHTUNG ZUR ÜBERWACHUNG EINES SCHMIERZUSTANDES EINES UMLAUFENDEN BANDES ZUM TRANSPORT VON PRESSGUT, SOWIE RELEVANTES VERFAHREN**
CONTINUOUSLY OPERABLE PRESS WITH DEVICE FOR MONITORING A STATE OF LUBRICATION OF A CONTINUOUS BELT FOR TRANSPORTING MATERIAL TO BE PRESSED, AND RELEVANT METHOD
PRESSE POUVANT FONCTIONNER EN CONTINU AVEC DISPOSITIF PERMETTANT DE SURVEILLER UN ÉTAT DE LUBRIFICATION D'UNE BANDE SANS FIN SERVANT AU TRANSPORT D'UN PRODUIT À PRESSER, ET PROCÉDÉ CORRESPONDANT

(30) Priorität: 31.12.2018 DE 102018010014
(43) Veröffentlichungstag der Anmeldung: 11.08.2021
(73) Patentinhaber: Siempelkamp Maschinen- und Anlagenbau GmbH, 47803 Krefeld (DE)
(72) Erfinder: SCHLETZ, Klaus-Peter, 47800 Krefeld (DE); SCHÜRMANN, Klaus, 41363 Jüchen (DE)
(74) Vertreter: Andrejewski - Honke Patent- und Rechtsanwälte Partnerschaft mbB
(86) Internationale Anmeldenummer: PCT/EP2019/085151
(87) Internationale Veröffentlichungsnummer: WO 2020/141060

(56) Entgegenhaltungen:
- EP-A1- 1 693 509
- DE-A1- 19 846 775
- DE-B4-102016 102 931
- DE-T2- 60 026 599
- JP-A- H06 174 431
- US-A1- 2003 160 973
- US-B1- 6 529 273
- US-B2- 7 391 035

## Beschreibung

Die vorliegende Erfindung betrifft eine kontinuierlich betreibbare Presse zur Herstellung von Werkstoffplatten gemäß Anspruch 1.

Weiterhin betrifft die Erfindung ein Verfahren zur Überwachung eines, durch ein Schmiermittel beeinflussbaren Schmierzustandes eines umlaufenden Bandes, welches zum Transport von Pressgut und zur Übertragung eines Pressdrucks auf das Pressgut in einer kontinuierlich betreibbaren Presse zur Herstellung von Werkstoffplatten ausgebildet ist, wobei eine Eingangsschnittstelle wenigstens mittelbar wenigstens ein Signal von einem Sensor empfängt, das auf einem von dem Sensor gemessenen physikalischen und/oder chemischen Phänomen, das wenigstens mittelbar mit einem Schmiermittelzustand an einer Oberfläche des Bandes zusammenhängt, basiert und in einer Auswerteeinheit ein Schmierparameter als Kenngröße für einen Schmiermittelzustand an der Oberfläche des Bandes basierend auf dem wenigstens einen Signal des Sensors ermittelt wird, wobei mittels einer Erregereinrichtung (10) auf das wenigstens eine, durch den Sensor (7) zu detektierende, physikalische und/oder chemische Phänomen des Schmiermittels (2) Einfluss genommen wird. Das Verfahren wird durch die kontinuierlich betreibbare Presse (5) der Erfindung durchgeführt.

Die Herstellung von Werkstoffplatten findet entweder taktgebunden oder kontinuierlich statt. Bei einer taktgebundenen Herstellung werden die Werkstoffplatten als flächenförmige Gegenstände mit in allen drei Raumrichtungen endlichen Abmaßen erzeugt, während die Werkstoffplatten die in einem kontinuierlichen Prozess erzeugt werden, Ablängungen einer lediglich in zwei Raumrichtungen endliche Abmaße aufweisenden Bahnware darstellen. Dabei gibt die Arbeitsweise der Füge- und/oder Verdichtungseinheit vor, ob der Gesamtprozess als taktgebundenes oder kontinuierliches Verfahren beschrieben wird. Da in den Verdichtungseinheiten, respektive den kombinierten Füge-und Verdichtungseinheiten im Allgemeinen bei der Werkstoffplattenerzeugung auch mit nennenswerten Drücken gearbeitet wird, werden diese Einheiten vom Fachmann meist mit Bezug auf eine Gesamtanlage als Pressenteil oder einfach als Presse bezeichnet. Unter einer kontinuierlich betreibbaren Presse werden also Pressen verstanden, die zur Erzeugung von, in Produktionsrichtung gesehen, "endloser" Bahnware geeignet sind. Dazu wird bei der Herstellung von Werkstoffplatten aus streufähigen Material ein Gemisch aus Partikeln oder faserartigen Stoffen und einem Bindemittel zu einer Streugutmatte auf ein Form- oder Förderband (Streubandförderer) gestreut. Diese Streugutmatte wird innerhalb der Presse mittels Druck und/oder Wärme unter stetigem Weitertransport zu einer zunächst als Bahnware vorliegenden, "endlosen" Werkstoffplatte gepresst. Bei der Erzeugung von Werkstoffplatten im Sinne der vorliegenden Schrift liegen die Arbeitsdrücke hier, abhängig von Material und Größe der zu erzeugenden Werkstoffplatte, meist in Bereichen zwischen etwa 80 N/cm² und 330 N/cm² und dort vorteilhafterweise zwischen 130 N/cm² und 280 N/cm². Beispielsweise können in dieser Art ein- oder mehrlagige Spanplatten, MDF-Platten (mitteldichte Faserplatten) oder OSB-Platten (Oriented Strand Board oder Grobspanplatten) hergestellt werden. Solche Pressen und entsprechende Herstellungsverfahren zeichnen sich durch große Produktivität, hohe Produktqualität und geringe Produktionskosten aus. Technologieführend sind hier die ContiRoll^{®}-Pressen der Anmelderin.

Im Sinne der vorliegenden Schrift bestehen die Werkstoffplatten bevorzugt aus Verbundwerkstoffen und dabei vorzugsweise aus Faser- insbesondere Holzverbundstoffen, Gipsverbundstoffen, Gewebeverbünden und/oder armierten Thermoplasten. Holzverbundstoffe umfassen beispielsweise Pressspan, OSB-Material (Oriented Strand Board-Material), MDF-Material (Mitteldichtes Holzfaser-Material), HDF-Material (Hochdichtes Holzfaser-Material), Multiplex-, Sperrholz-, Leichtbauplatten, Fournier Schichtholz u.a. Unter Gipsverbundstoff werden hier insbesondere die verschiedenen Arten von Gipskarton verstanden. Unter dem Begriff der Gewebeverbundstoffe, sollen Verbundstoffe verstanden werden, bei denen wenigstens ein Verbundanteil ein Gewebe umfasst. Dies ist am häufigsten bei so genannten gewebearmierten Laminaten der Fall. In einfachster Ausgestaltung kann der Begriff jedoch auch ein lediglich imprägniertes Gewebe umfassen. Unter armierten Thermoplasten sollen nach allgemeinem Sprachgebrauch alle (faser-)verstärkten Thermoplaste verstanden werden.

Eine Werkstoffplatte kann im Sinne der vorliegenden Schrift zudem aus einem Mischverbund in Form eines Laminats bestehen, sofern wenigstens eine Lage des Laminats einem der beschriebenen Verbundwerkstoffe entspricht.

Bei der Werkstoffplattenerzeugung mittels einer kontinuierlich betreibbaren Presse wird das zu verpressende Material, dass bei holzhaltigen Materialien meist zunächst in Form einer Streugutmatte vorliegt, mittels eines umlaufenden Bandes, insbesondere eines Stahlbandes, dem Pressbereich zugeführt und unter auf das Material, insbesondere die Streugutmatte bzw. die sich bildende, endlose Werkstoffplatte, durch den Pressbereich transportiert. Üblicherweise übt dabei eine Vielzahl von Presszylindern einen Pressdruck über das Band auf die Streugutmatte bzw. die sich bildende, endlose Werkstoffplatte aus, während das Material von Heizplatten erwärmt wird. Zwischen dem Band und den Presszylindern sind zumeist Rollstangen zur Verringerung der Reibung und zur Druckweitergabe angeordnet. Sowohl das Band als auch die Rollstangen werden dabei im umlaufenden Betrieb über Umlenkzylinder geführt und von Antriebswalzen angetrieben. Das Band ist flexibel, insofern als es über Rollen umgelenkt werden kann.

Während des Betriebs der kontinuierlich betreibbaren Presse bewegen sich das Band sowie die sich um ihre Längsachsen drehenden Rollstangen an den ortsfesten Presszylindern und den Heizplatten vorbei. Hierbei entstehen Reibungskräfte, die durch eine Schmierung gering gehalten werden müssen. Dazu können beispielsweise spezielle Öle als Schmiermittel verwendet. Das Schmiermittel wird auf das Band und/oder die Rollstangen aufgebracht, wobei sowohl eine Unterschmierung als auch eine Überschmierung problematisch sein können. So kann aus Erfahrung gesagt werden, dass ein zu geringer Schmiermitteleintrag beispielsweise zu einer hohen Reibung und zu starkem Verschleiß führen kann, während die Folgen eines zu hohen Schmiermitteleintrags beispielsweise übermäßige Verschmutzung und übermäßig hohe Schmiermittelkosten sein können.

Bei vielen Pressanlagen wird eine geeignete Ölmenge üblicherweise geschätzt, wobei dann während der Inbetriebnahmephase der Presse eine Feinabstimmung durch das Servicepersonal des Pressenherstellers erfolgt. Die Feinabstimmung wird dabei auf Basis eines visuellen Eindrucks der Restschmiermenge auf dem Stahlband am Auslauf der Presse vorgenommen. Der so gewonnene Erfahrungswert wird dann an den Betreiber weitervermittelt. Diese Methode erfordert eine regelmäßige Inspektion und wiederkehrende Überwachungstätigkeit, da die richtige Ölmenge stark von den Produktionsparametern einer jeweiligen Produktionscharge abhängt. Dabei spielen beispielsweise die Temperatur, das Druckprofil, die Produktionsgeschwindigkeit, aber auch Materialkennwerte, Materialstärke eine wichtige Rolle. Zudem nehmen der vorliegende Verschmutzungszustand der Presse und der Abnutzungsgrad von darin vorgesehen Verschleißteilen Einfluss auf die relevanten Schmierzustände. Eine kontinuierlich betreibbare Presse mit zugehörigem Schmiersystem ist aus der DE 31 48 412 A1 bekannt geworden. Diese Presse wurde mit einer Weiterentwicklung nach DE 40 15 706 A1 verbessert.

Aus der DE 41 26 717 C1 der Anmelderin ist weiter eine Pressanlage mit einer Schmiervorrichtung bekannt, wobei die Schmiervorrichtung dazu ausgebildet ist, einen Schmiermittelfilm eines flüssigen Schmiermittels auf die Stahlbänder und die Rollkörper aufzubringen und einlaufseitig im Bereich der Rollkörperumlaufeinrichtung angeordnet ist. Das dort beschriebene Prinzip, des indirekten Schmiermittelauftrags auf die Pressbänder über die zwischengeschalteten Rollkörper hat sich besonders gut bewährt.

Aus der DE 10 2016 102 931 B4 ist eine kontinuierlich betreibbare Presse mit einer Vorrichtung bzw. ein Verfahren zur Überwachung und/oder Regelung eines Schmierzustandes gemäß dem Oberbegriff des Anspruchs 1 bzw. 14 bekannt geworden. Dort bleibt jedoch nachteilig, dass auf Grund des darin offenbarten Messverfahrens letztlich keine zuverlässige Aussage über die für einen Pressprozess relevanten Schmierzustand getroffen werden kann und dem entsprechend ein hohes Risiko für fehlerhafte Steuerungen oder Regelungen bestehen bleibt.

Der vorliegenden Erfindung liegt deshalb die Aufgabe zugrunde, den durch ein Schmiermittel beeinflussbaren Schmierzustand eines umlaufenden Bandes in einer kontinuierlich betreibbaren Presse zuverlässig zu überwachen. Dabei sollen insbesondere Fehlerquellen und Möglichkeiten zur Fehlinterpretation reduziert oder verhindert werden. Insbesondere soll an Hand der generierbaren Überwachungsergebnisse der Schmierzustand der Presse verbessert werden. Dabei soll insbesondere einerseits eine übermäßige Verwendung von Schmiermittel verhindert werden und andererseits durch eine ausreichende Schmierung sichergestellt werden, dass die Komponenten der Presse nicht beschädigt werden und eine lange Lebensdauer haben.

Diese Aufgabe wird bei einer Vorrichtung der eingangs genannten Art dadurch gelöst, dass die Vorrichtung eine Erregereinrichtung aufweist, die zur Einflussnahme auf das wenigstens eine, durch den Sensor zu detektierende, physikalische und/oder chemische Phänomen des Schmiermittels ausgebildet ist. Bei dem Schmiermittel handelt es sich vorzugsweise um ein organisches Schmiermittel. Bei dem Band handelt es sich vorzugsweise um ein Band das eine Oberfläche aus einem anorganischen Material oder einer anorganischen Beschichtung aufweist. Das Band kann beispielsweise ein Stahlband sein.

Die Erfinder haben dazu erkannt, dass detektierbare Phänomene (oder Eigenschaften) des Schmiermittels im rauen Produktionsalltag beispielsweise durch über den Zeitraum einer oder mehrerer Betriebsschichten zunehmenden Verschmutzungsgraden der Anlage, der Umgebungsatmosphäre und insbesondere des Schmiermittels selbst, überschattet werden können, oder sich sogar Charakteristika des Schmiermittels und damit auch die detektierbaren Phänomene (oder Eigenschaften) verändern können. Durch die gezielte Einflussnahme auf das wenigstens eine, durch den Sensor zu detektierende, physikalische und/oder chemische Phänomen des Schmiermittels kann dies ausgeglichen werden.

Mit Vorteil kann beispielsweise die Intensität der von der Erregereinrichtung ausgesendeten und auf das wenigstens eine durch den Sensor zu detektierende, physikalische und/oder chemische Phänomen des Schmiermittels Einflussnehmende Größe auf Grund bestimmter Messwerte (bspw. der Viskosität, eines Verschmutzungsgrades, eines Lichtbrechungsindexes o.ä.) oder auch einfach in Abhängigkeit der Zeit, angepasst werden. Die Intensität kann sich dazu im ein- bis vierstelligen Prozentbereich erhöhen oder in entsprechendem Maß reduziert werden.

Die Erregereinrichtung ist zur Ausstrahlung einer elektromagnetischen Strahlung mit einer Wellenlänge oder einem Wellenlängenspektrum, das innerhalb eines ersten Wellenlängenbereichs liegt, ausgebildet, wobei der erste Wellenlängenbereich außerhalb eines zweiten, von dem wenigstens einen Sensor und/oder der Eingangsschnittstelle detektierbaren, Wellenlängenbereichs liegt.

Dabei kann es vorgesehen sein, dass die Erregereinrichtung einen Filter umfasst oder mit einem Filter in Wirkverbindung steht, um die Ausstrahlung einer elektromagnetischen Strahlung mit einer Wellenlänge oder einem Wellenlängenspektrum, das innerhalb eines ersten Wellenlängenbereichs liegt, zu gewährleisten.

Dadurch, dass die Erregereinrichtung zur Ausstrahlung einer elektromagnetischen Strahlung mit einer Wellenlänge oder einem Wellenlängenspektrum, das innerhalb eines ersten Wellenlängenbereichs liegt, ausgebildet, wobei der erste Wellenlängenbereich außerhalb eines zweiten, von dem wenigstens einen Sensor und/oder der Eingangsschnittstelle detektierbaren, Wellenlängenbereichs liegt, kann sichergestellt werden, dass die von dem oder den dafür vorgesehenen Sensoren detektierten Signale frei von Störeinflüssen sind. Ist der erste Wellenlängenbereich nämlich mit einem Phänomen (oder einer Eigenschaft) des Schmiermittels so abgestimmt, dass das Schmiermittel oder wenigstens Bestandteile des Schmiermittels als Reaktion Signale, insbesondere elektromagnetische Wellen mit Wellenlängen aussenden, die innerhalb eines zweiten Wellenlängenbereichs liegen, so kann sichergestellt werden, dass der Sensor, der zur, insbesondere ausschließlichen, Detektion von Signalen, insbesondere elektromagnetischen Wellen, mit Wellenlängen aussenden, die innerhalb eines zweiten Wellenlängenbereichs liegen, ausgelegt ist auch nur die gewünschten Signale detektiert und damit unverfälschte Rückschlüsse zulässt.

Dabei kann es vorgesehen sein, dass der Sensor einen Filter umfasst oder mit einem Filter in Wirkverbindung steht, um zu gewährleisten, dass ausschließlich elektromagnetische Strahlung mit einer Wellenlänge oder einem Wellenlängenspektrum, das innerhalb des zweiten Wellenlängenbereichs liegt, detektierbar ist.

In diesem Zusammenhang ist das Phänomen der Fluoreszenz bevorzugt nutzbar. Dazu kann die Verwendung von Schmiermitteln mit speziellen Additiven vorgesehen sein.

Es ist von Vorteil, wenn die Erregereinrichtung eine Steuereinheit umfasst oder mit einer Steuereinheit in Wirkverbindung steht.

Auf diese Weise ist die Erregereinrichtung besonders effektiv einsetzbar. Zudem können Fehlerquellen durch manuelle Fehlbedienungen ausgeschlossen werden.

Es ist bevorzugt, dass die Steuereinheit die Erregereinrichtung zur kontinuierlichen oder zur niedriggepulsten Ausstrahlung von elektromagnetischen Wellen ansteuert.

Auf diese Weise kann der erste Wellenlängenbereich einerseits klar definiert werden und sich dabei sogar in engen Grenzen ausbilden. Dadurch kann sichergestellt werden, dass die Erregereinrichtung nicht ungewünscht Signale aussendet, deren Wellenlängen in ungewünschter, und dann gegebenenfalls auch unbemerkter, Weise in den zweiten Wellenlängenbereich fallen. Bei der kontinuierlichen Ansteuerung ist es sogar möglich eine einzige bestimmte Wellenlänge auszuwählen, wobei Schwankungen unterhalb von einem Nannometer (nm) im Sinne dieser Schrift unbeachtet bleiben sollen.

Von großem Vorteil ist es, wenn die Erregereinrichtung und/oder die Steuereinheit zur Ausstrahlung elektromagnetischer Strahlung mit einer Wellenlänge oder einem Wellenlängenspektrum, das ausschließlich innerhalb des ersten Wellenlängenbereichs liegt, ausgebildet ist.

Dies verhindert die Gefahr, dass die Erregereinrichtung elektromagnetische Strahlung mit einer Wellenlänge oder einem Wellenlängenspektrum, aussendet, das in den zweiten Wellenlängenbereichs eindringt und damit die Ergebnisse des oder der Sensoren ungewünscht beeinflusst.

Vorzugsweise ist die Erregereinrichtung zur Ausstrahlung einer gerichteten elektromagnetischen Strahlung, insbesondere Lichts, ausgebildet.

Auf diese Weise lassen sich ein oder mehrere definierte, bewegte oder unbewegte Areale überwachen. Dabei sind, abhängig von der Wellenlänge, sehr feine Fokussierungen möglich. Zudem halten sich dann die zutreffenden Sicherheitsvorkehrungen für das Umfeld der Vorrichtung in überschaubaren Grenzen.

In einigen Fällen kann es von besonderem Vorteil sein, wenn die Erregereinrichtung einen Laser, insbesondere einen continuous-wave-Laser, oder eine UV-Lichtquelle, insbesondere eine UV-Lampe, umfasst.Erregereinrichtungen, die als Laser ausgebildet sind bieten allgemein den Vorteil, der gerichteten Ausstrahlung, während es situationsbedingt jedoch auch die ungeordnete Streuung des ausgesendeten Lichts einer anderen Lichtquelle, bspw. einer UV-Lampe bevorzugt sein kann. Continuous-wave-Laser sind geeignet klar definierte Wellenlänge auszusenden, wobei Schwankungen unterhalb von einem Nannometer (nm) im Sinne dieser Schrift unbeachtet bleiben sollen. Somit lassen sich besonders gut definierte Erregungen als Grundlage für aussagekräftige und unverfälschte Detektionsergebnisse erzielen.

In anderen Fällen kann es von Vorteil sein, wenn die Erregereinrichtung einen quasi-continuous-wave-Laser umfasst.

Gepulste Laser werden heute mit bis zu 1.000 Hz und höheren Frequenzen gepulst. Unter einem hochgepulsten Laser versteht man seit den 1990er Jahren Laser, die mit Frequenzen über 700 Hz oder 800 Hz gepulst sind. Dagegen erreichen niedriggepulste Laser, die auch als quasi-continuous-wave-Laser bezeichnet werden, nur Frequenzen bis zu etwa 250 Hz maximal 300 Hz. Obwohl derartige Laser zwar veraltet scheinen und bei ansonsten gleichen Voraussetzungen nicht in der Lage sind auch nur annähernd gleiche Energiewerte zu emittieren, ist die Streuung der Bandbreite der von ihnen ausgesendeten Lichtwellen wesentlich konzentrierter. Da die Erfinder, wie bereits beschrieben, erkannt haben, dass sich der molekulare Aufbau eines, insbesondere organischen, Schmiermittels beispielsweise unter den speziellen Anwendungsbedingungen einer kontinuierlich betreibbaren Presse zur Werkstoffplattenherstellung im Laufe des Normalbetriebs verändert, ist es besonders wichtig, dass ausschließlich definierte Bestandteile des organischen Schmiermittels zur Detektion des Schmiermittelzustands angeregt werden. Man möchte sich daher auf einen engen Frequenzbereich beschränken. Zudem sollen andere Bestandteile des, vorzugsweise organischen, Schmiermittels auch über den Verlauf ihrer sich ändernden Aufbauten und Eigenschaften von den gewählten Frequenzbereichen nicht oder zumindest nicht ausreichend erregt werden.

Quasi-continuous-wave-Laser sind dazu geeignet, Laserlicht mit Wellenlängen innerhalb eines klar definierten und engen Wellenlängenbereichs auszusenden. Dadurch kann sichergestellt werden, dass die den Laser umfassende Erregereinrichtung nicht ungewünscht Signale aussendet, deren Wellenlängen in ungewünschter, und dann gegebenenfalls auch in unbemerkter, Weise in den zweiten Wellenlängenbereich fallen.

Der erste Wellenlängenbereich umfasst Wellenlängen zwischen 329 nm und 416 nm, insbesondere im Bereich von 342 nm bis 411 nm, ganz insbesondere von 364 nm bis 407 nm.

Diese Wellenlängen eignen sich ganz besonders gut um in bestimmten Schmiermitteln vorhandene Schmiermittelbestandteile, insbesondere spezielle Schmiermitteladditive, wirkungsvoll zur Fluoreszenz anzuregen. Bei Wellenlängen innerhalb dieser Bereiche gilt bei Einhaltung einer Obergrenze von 380 nm der zusätzliche Vorteil, dass das Licht noch nicht in den sichtbaren Bereich fallen und sich damit Störungen von Sensoren, die auf (sichtbares) Licht reagieren, besonders gut vermeiden lassen. Dies ist insbesondere dann von Vorteil, wenn diese Sensoren dort angeordnet sein müssen, wo unter normalen Arbeitsbedingungen innerhalb eines ein oder mehrschichtigen Betriebs wenigstens temporär Tages- und/oder Kunstlicht scheinen soll. Demzufolge kann es beispielsweise bevorzugt sein, dass eine Erregerquelle mit einer definierten Wellenlänge oder einem definierten Wellenlängenbereich gewählt ist, die oder der im Bereich zwischen 329 nm und 380 nm, insbesondere im Bereich zwischen 342 und 380 nm und ganz insbesondere im Bereich zwischen 364 und 380 nm angesiedelt ist. Elektromagnetische Strahlen die in diesem Wellenlängenbereich angesiedelt sind weisen eine ausreichende Energiedichte auf um die innerhalb eines Schmierfilms statistisch verteilten, erregbaren Bestandteile über die gesamte Schmierfilmbreite zu stimulieren, wobei die Schmierfilmbreite eines umlaufenden Bandes zum Transport von Pressgut vorzugsweise zwischen 1µm und 35µm, ganz vorzugsweise zwischen 5µm und 25µm betragen sollte. Somit werden, abgestimmt auf die Schmierfilmbreite und insbesondere auf den Anwendungsfall einer kontinuierlich betreibbaren Presse zur Werkstoffplattenherstellung, Messfehler vermieden und die Qualität der Messergebnisse verbessert. Zudem sind elektromagnetische Strahlen in dem genannten Wellenlängenbereich geeignet, bei Auftreffen auf die Oberfläche eines Bandes zum Transport von Pressgut in geeigneter Weise reflektiert zu werden und so nicht zur ungewünschten Förderung des Verschleiß des Bandes beizutragen. Dazu ist es von Vorteil, wenn das die Oberfläche des Bandes aus einem anorganischen Material, insbesondere aus Stahl gefertigt ist und eine glatte Struktur aufweist. Von besonderem Vorteil ist es dabei, dass die beschriebenen elektromagnetische Strahlen -unter praktischen Gesichtspunkten betrachtetunabhängig von der Oberflächenbeschaffenheit des Bandes reflektiert werden. So kann das Band arealweise Verfärbungen oder Ungleichmäßigkeiten in der mechanischen Oberflächenbeschaffenheit, insbesondere Rauheit, aufweisen, ohne dass dies zu Irritationen des wenigstens einen Sensors führen muss.

Der zweite Wellenlängenbereich umfasst Wellenlängen zwischen 417 nm und 576 nm, insbesondere im Bereich von 419 nm bis 547 nm, ganz insbesondere von 420 nm bis 520 nm.

Dieser Wellenlängenbereich unterscheidet sich einerseits deutlich genug vom dem Wellenlängenbereich der von der Erregerquelle ausgesendeten elektromagnetischen Strahlung (ersten Wellenlängenbereich) und andererseits von dem in der Umgebung eines Bandes zum Transport von Pressgut üblicherweise zu vermutenden Wellenlängenbereichen.

Ein Sensor zur Detektion der Umgebungsstrahlung ist auch vorgesehen.

Dadurch kann dann leicht die aus dem Schmiermittel emittierte, zusätzliche Strahlungsmenge errechnet werden.

Die Vorrichtung umfasst auch eine Schnittstelle zur Kommunikation mit einer Pressensteuerungs- und/oder-regelungseinheit.

Auf diese Weise ist es möglich, ein- oder bidirektional, Daten zwischen der Eingangsschnittstelle der Vorrichtung und einer Pressensteuerungs- und/oder - regelungseinheit auszutauschen. So können die erfassten Daten besonders effektiv dazu benutzt werden, um auf den Produktionsprozess und insbesondere auf die Bandschmierung einzuwirken. Mit besonderem Vorteil kann die Steuerung und/oder Regelung einer Einheit zum Schmiermittelauftrag und/oder zur Schmiermittelverteilung unter Einflussnahme der detektierten physikalischen und/oder chemischen Phänomen des, vorzugsweise organischen, Schmiermittels vorgenommen werden.

Ferner kann es von Vorteil sein, wenn die Schnittstelle wenigstens einen der wenigstens einen Sensoren und/oder die Auswerteeinheit und/oder die Eingangsschnittstelle und/oder die Steuereinheit umfasst.

Dies kann regelungstechnische Vorteile bringen. Zudem sind diffizile elektrische Bauteile so durch einen gemeinsamen baulichen Schutz gegen ungünstige atmosphärische Bedingungen, wie sie beispielsweise in einer Fabrik zur Herstellung von Werkstoffplatten, respektive Bahnwaren aus Pressgut, beispielsweise Pressspan-, MDF- oder OSP-Platten, vorherrschen gut zu schützen.

Die Schnittstelle und/oder die Pressensteuerungs- und/oder - regelungseinheit ist zur Kommunikation mit einer Analyseeinheit zur Ermittlung von Umgebungsstrahlung mit Wellenlängen innerhalb des zweiten Wellenlängenbereichs ausgebildet.

Auf diese Weise können Störeinflüsse von den Detektionsergebnissen ausgefiltert werden. Die Schnittstelle subtrahiert den Anteil der aus der Umgebung stammenden Strahlungen mit Wellenlängen innerhalb des zweiten Wellenlängenbereichs aus der Gesamtmenge der ermittelten Strahlen.

Der verbleibende Anteil ist dann beispielsweise dem Flurenzenzvermögen des Schmiermittels zuzuordnen und in Folge dessen ein eindeutiger Rückschluss auf die Schichtdicke des Schmiermittelfilms, der mit der Oberfläche des Bandes zum Transport von Pressgut in Kontakt steht, möglich.

Ferner kann es von Vorteil sein, wenn die Vorrichtung eine Traverse umfasst, entlang der die Erregereinrichtung winklig gegenüber dem Band bewegbar ist.

Auf diese Weise ist es möglich, mit einem einzelnen Sensor die Stärke des mit dem Band zum Transport von Pressgut in Kontakt stehenden Schmiermittelfilms in genügender Weise zu erfassen. Es ist selbstverständlich, dass dazu auch zwei oder mehr Sensoren geeignet sind, die versetzt zueinander winklig über das Band bewegbar angeordnet sind Dann sind die Sensoren oder die wenigstens eine Steuereinheit so ausgebildet, dass die Detektionsergebnisse der wenigstens zwei Sensoren miteinander synchronisierbar sind.

Die Traverse sollte vorzugsweise in einem Winkel zwischen 30° und 60° gegenüber dem Bandverlauf geführt sein.

Mit besonderem Vorteil umfasst die Vorrichtung eine Konditionierungseinrichtung, insbesondere zur Kühlung der Erregereinrichtung.

Auf diese Weise kann eine hohe Qualität von Messergebnissen gefördert werden. Sich ändernde Umgebungseinflüsse haben häufig Einfluss auf die Messwertaufnahme und/oder -berurteilung. Analysegeräte für elektromagnetische Strahlungen, insbesondere für Wellenlängen in den genannten Bereichen, sind meist Wärmeempfindlich und sollten in einem Temperaturbereich von 5°C bis 60°C betrieben werden. Innerhalb einer oder im Umgebungsbereich einer kontinuierlich arbeitenden Presse können 60°C Lufttemperatur jedoch deutlich überschritten werden.

Bei einer kontinuierlich betreibbaren Presse der eingangs beschriebenen Gattung, wird die Aufgabe der Erfindung dadurch gelöst, dass die Vorrichtung eine Erregereinrichtung aufweist, die zur Einflussnahme auf das wenigstens eine, durch den Sensor zu detektierende, physikalische und/oder chemische Phänomen des Schmiermittels ausgebildet ist.

Die Erfinder haben also wie bereits im Zusammenhang mit der Beschreibung der Vorrichtung zur Überwachung eines Schmierzustandes eines umlaufenden Bandes zum Transport von Pressgut beschrieben, erkannt, dass detektierbare Phänomene (oder Eigenschaften) des Schmiermittels im rauen Produktionsalltag beispielsweise durch über den Zeitraum einer oder mehrerer Betriebsschichten zunehmenden Verschmutzungsgraden der Anlage, der Umgebungsatmosphäre und insbesondere des Schmiermittels selbst, überschattet werden können, oder sich sogar Charakteristika des Schmiermittels und damit auch die detektierbaren Phänomene (oder Eigenschaften) verändern können. Dies gilt im Besonderen Maße für die Bedingungen innerhalb einer kontinuierlich betreibbaren Presse zur Herstellung von Werkstoffplatten. Ebenfalls gilt dies im besonderen Maße für die dort zur Anwendung kommenden organischen Schmiermittel. Die tribologischen Systeme, die sich aus den konstruktiven Anforderungen derartiger Pressen, die meist mit Bändern aus Stahl arbeiten, ergeben sind hochkomplex, da sie im Allgemeinen als offene Systeme betrachtet werden müssen. Aus tribologischer Sicht handelt es sich bei einer kontinuierlich betreibbaren Presse, wie z.b. den ContiRoll Pressen verschiedener Generationen, dem Prinzip nach um zwei gegeneinander arbeitende und bei hohen Temperaturen zu betreibende Wälzlager mit Verbrauchsschmierung, wobei die Systeme durch stark wechselnde Betriebsbedingungen und einwirkende Fremdstoffe sowie ihren räumlichen Ausmaßen mit keinem anderen Wälzlager oder Maschinensystem vergleichbar sind. Zudem arbeiten bisher bekannte Pressen praktisch ständig im Mischreibungsbereich, obwohl der Jahresverbrauch einer einzelnen kontinuierlich betreibbaren Presse zur Herstellung von Werkstoffplatten mit 2.4 Meter (8 Fuss) Arbeitsbreite und 2 Meter pro Sekunde Betriebsgeschwindigkeit nach Stand der Technik heute etwa zwischen 20.000 Liter und 70.000 Liter Spezialöl pro Jahr beträgt. Durch die gezielte Einflussnahme auf das wenigstens eine, durch den Sensor zu detektierende, physikalische und/oder chemische Phänomen des Schmiermittels kann die Schmiersituation deutlich besser beurteilt werden und in Folge dessen verbessert werden. Dabei ist gleichzeitig eine Reduzierung des Schmiermittelbedarfs möglich.

Mit Vorteil kann beispielsweise die Intensität der von der Erregereinrichtung ausgesendeten und auf das wenigstens eine durch den Sensor zu detektierende, physikalische und/oder chemische Phänomen des Schmiermittels Einflussnehmende Größe auf Grund bestimmter Messwerte (bspw. der Viskosität, eines Verschmutzungsgrades, eines Lichtbrechungsindexes o.ä.) oder auch einfach in Abhängigkeit der Zeit, angepasst werden. Die Intensität kann sich dazu im ein- bis vierstelligen Prozentbereich erhöhen oder in entsprechendem Maß reduziert werden.

Dabei ist es bevorzugt, dass die Presse nach einem der Ansprüche 2 bis 13 ausgebildet ist.

In diesem Zusammenhang gelten im Bezug auf die vorteilhaften Ausgestaltungen der kontinuierlich betreibbaren Presse mit einer Vorrichtung zur Überwachung eines Schmierzustandes eines umlaufenden Bandes zum Transport von Pressgut entsprechend.

Von besonderem Vorteil ist es, wenn die Presse eine steuerbare und/oder regelbare Auftragseinheit zum vorzugsweise über die Breite des Bandes abschnittsweise dosierbaren Auftragen von Schmiermittel umfasst und die Auftragseinheit in Abhängigkeit von dem durch den Sensor zu detektierenden, physikalischen und/oder chemischen Phänomen des Schmiermittels steuerbar und/oder regelbar ist.

Auf diese Weise ist ein geschlossener Regelkreis realisierbar. Zudem ist eine besonders gute und sichere Schmiermittelversorgung auch dann sicher gewährbar, wenn aus wirtschaftlichen Gründen die Stärke des Schmiermittelfilms möglichst gering gehalten werden soll. Darüberhinaus kann eine besonders gleichmäßige Schmierfilmstärkenverteilung auch die Qualität des zu erzeugenden Produktes, hier also des Pressgut-Produktes, deutlich erhöhen. Bei einem Verfahren der eingangs beschriebenen Gattung wird die Aufgabe der Erfindung dadurch gelöst, dass mittels einer Erregereinrichtung auf das wenigstens eine, durch den Sensor zu detektierende, physikalische und/oder chemische Phänomen des Schmiermittels Einfluss genommen wird.

Gemäß der Erfindung wird zur Durchführung des Verfahrens eine kontinuierlich betreibbare Presse gemäß einem der Ansprüche 1 bis 13 verwendet.

Für das erfindungsgemäße Verfahren und dessen vorteilhafte Ausgestaltungen gelten die im Bezug auf die vorteilhaften Ausgestaltungen der kontinuierlich betreibbaren Presse entsprechend. Wenigstens ist dem Fachmann klar, wie die dortigen Lehren auf die Ausgestaltung des Verfahrens zu übertragen sind.

Offenbart wird auch ein System - das kein Teil der beanspruchten Erfindung ist - aus einer kontinuierlich betreibbare Presse zur Herstellung von Werkstoffplatten, wobei die Presse eine Vorrichtung zur Überwachung eines, durch ein Schmiermittel beeinflussbaren Schmierzustandes eines umlaufenden Bandes, welches zum Transport von Pressgut und zur Übertragung eines Pressdrucks auf das Pressgut ausgebildet ist, umfasst, wobei die Vorrichtung eine Eingangsschnittstelle aufweist, die zum wenigstens mittelbaren Empfangen wenigstens eines Signals von einem Sensor ausgebildet ist, wobei der Sensor zum Messen eines physikalischen und/oder eines chemischen Phänomens ausgebildet ist, das wenigstens mittelbar mit einem Schmiermittelzustand an einer Oberfläche des Bandes zusammenhängt und die Vorrichtung weiter eine Auswerteeinheit zum Ermitteln eines Schmierparameters als Kenngröße für einen Schmiermittelzustand an der Oberfläche des Bandes basierend auf dem wenigstens einen Signal des Sensors umfasst und die Vorrichtung eine Erregereinrichtung aufweist, die zur Einflussnahme auf das wenigstens eine, durch den Sensor zu detektierende, physikalische und/oder chemische Phänomen des Schmiermittels ausgebildet ist und wobei das Schmiermittel spezielle Additive aufweist, die mittels Energiebeaufschlagung durch elektromagnetische Wellen zur Floreszenz anregbar sind. Dabei ist die Erregereinrichtung derart ausgebildet, dass sie elektromagnetische Wellen bestimmter Wellenlängen aussenden kann.

Die Vorrichtung und das Schmiermittel bilden ein System, wobei die Wellenlängen in einem Bereich liegen, der speziell auf die Anforderungen der speziellen Additive abgestimmt ist und diese bevorzugt besonders gut zur Fluoreszenz anregt. Dabei ist es bevorzugt, dass das Schmiermittel im Zustand der Zuführung auf das Band einen Gewichtsprozentanteil von wenigstens 0,02%, vorzugsweise wenigstens 0,035% von den genannten speziellen Additiven aufweist.

Die Erfindung wird im Folgenden anhand einer, lediglich ein Ausführungsbeispiel darstellenden Zeichnung näher erläutert. Darin zeigen:
- Fig. 1: Schematische Darstellung einer Vorrichtung zur Überwachung eines, durch ein Schmiermittel beeinflussbaren Schmierzustandes eines umlaufenden Bandes zum Transport von Pressgut
- Fig. 2: Schematische Darstellung eines, mit einem Schmierfilm benetzten Areals eines umlaufenden Bandes zum Transport von Pressgut
- Fig. 3: Seitenansicht einer beispielhaften Ausgestaltung einer kontinuierlich betreibbaren Presse zur Herstellung von Werkstoffplatten, die eine Vorrichtung zur Überwachung eines, durch ein Schmiermittel beeinflussbaren Schmierzustandes eines umlaufenden Bandes zum Transport von Pressgut aufweist.

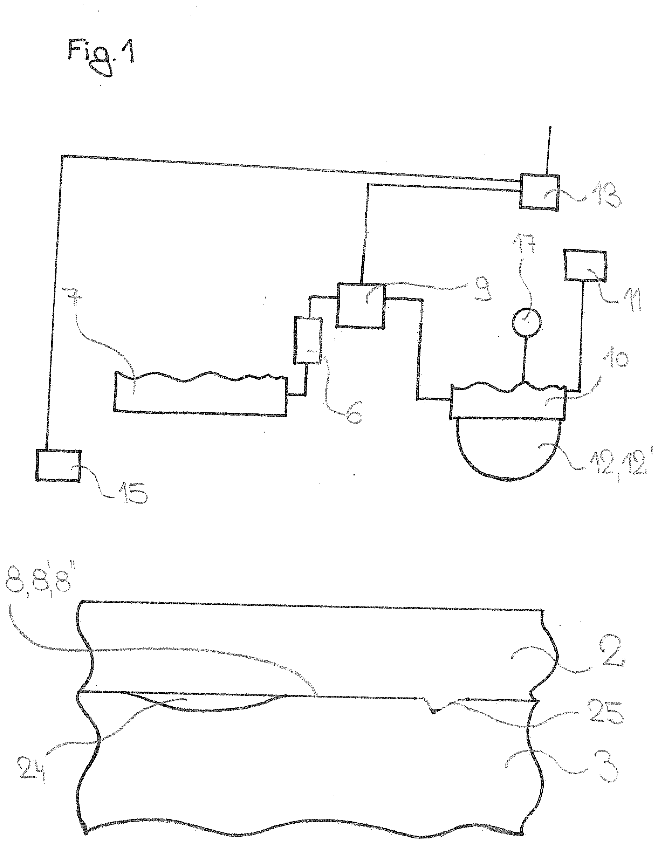

Fig. 1 zeigt eine Schematische Darstellung einer Vorrichtung 1 zur Überwachung eines, durch ein Schmiermittel 2 beeinflussbaren Schmierzustandes eines umlaufenden Bandes 3, welches zum Transport von Pressgut 4 und zur Übertragung eines Pressdrucks auf das Pressgut 4 in einer kontinuierlich betreibbaren Presse 5 zur Herstellung von Werkstoffplatten ausgebildet ist. Die Vorrichtung 1 weist eine Eingangsschnittstelle 6 auf, die zum wenigstens mittelbaren Empfangen wenigstens eines Signals von einem Sensor 7 ausgebildet ist, wobei der Sensor 7 zum Messen eines physikalischen und/oder eines chemischen Phänomens ausgebildet ist, das wenigstens mittelbar mit einem Schmiermittelzustand an einer Oberfläche 8 des Bandes 3 zusammenhängt. Die Vorrichtung 1 umfasst zudem eine Auswerteeinheit 9 zum Ermitteln eines Schmierparameters als Kenngröße für einen Schmiermittelzustand an der Oberfläche 8 des Bandes 3 basierend auf dem wenigstens einen Signal des Sensors 7.

Die Vorrichtung 1 weist weiter eine Erregereinrichtung 10 auf, die zur Einflussnahme auf das wenigstens eine, durch den Sensor 7 zu detektierende, physikalische und/oder chemische Phänomen des organischen Schmiermittels 2 ausgebildet ist. Dabei ist die Vorrichtung 1 derart ausgebildet, dass der Schmierzustand an der inneren Oberfläche 8' und/oder an der äußeren Oberfläche 8" des umlaufenden Bandes 3 überwachbar ist. Bei dem den Schmierzustand beeinflussbaren Schmiermittel 2 handelt es sich im vorliegenden Ausführungsbeispiel um ein organisches Schmiermittel, welches neben Hochdruck- und verschleißmindernden Additiven spezielle Additive 19 enthält, die sich auch bei zunehmender Verschmutzung (als Schmutzpartikel 26 beispielhaft angedeutet) statistisch im Volumen des mit der Oberfläche 8, 8', 8" des Bandes 3 in Kontakt stehenden Schmiermittelfilms verteilen und mittels elektromagnetischer Strahlung 20 zur Fluoreszenz 21 anregbar sind. Die Erregereinrichtung 10 ist zur Ausstrahlung von elektromagnetischen Wellen ausgebildet. Dabei ist die Erregereinrichtung 10 derart ausgebildet, dass sie elektromagnetische Wellen bestimmter Wellenlängen aussenden kann. Die Vorrichtung 1 und das Schmiermittel 2 bilden ein System 22, wobei die Wellenlängen in einem Bereich liegen, der speziell auf die Anforderungen der speziellen Additive 19 abgestimmt ist und diese bevorzugt besonders gut zur Fluoreszenz anregt.

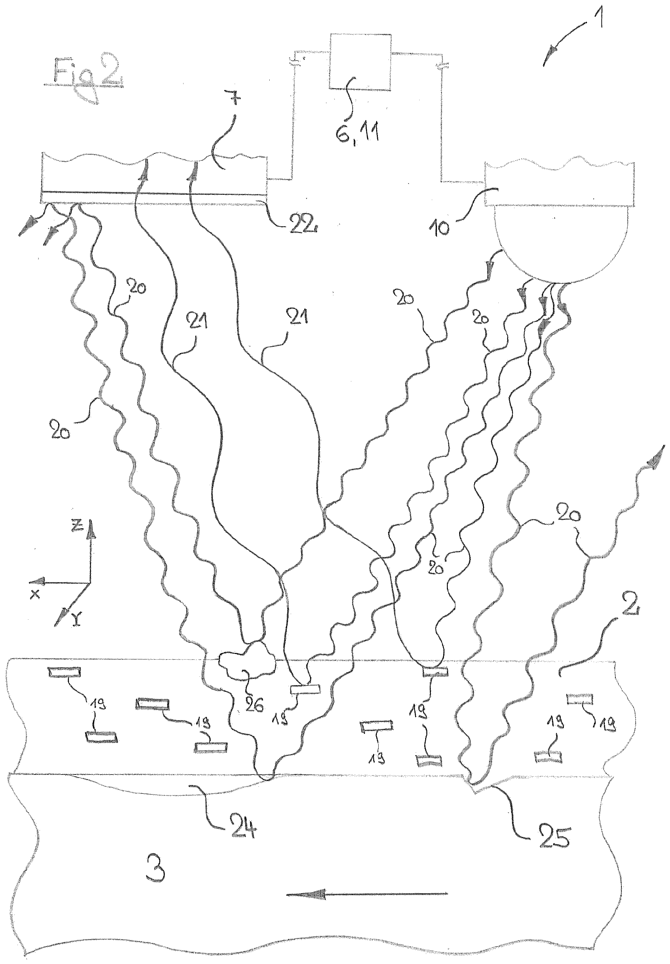

Ferner ist die Erregereinrichtung 10 derart ausgestaltet, dass sie elektromagnetische Strahlung mit einer Wellenlänge oder einem Wellenlängenspektrum ausstrahlt, das innerhalb eines ersten Wellenlängenbereichs liegt, wobei der erste Wellenlängenbereich außerhalb eines zweiten, von dem wenigstens einen Sensor 7 und/oder der Eingangsschnittstelle 10 detektierbaren, Wellenlängenbereichs liegt. Wie aus Figur 2 erkennbar ist, regen die von der Erregereinrichtung 10 ausgestrahlten elektromagnetischen Wellen 20, die eine Wellenlänge oder ein Wellenlängenspektrum ausstrahlen, dass innerhalb eines erstem Wellenlängenbereichs liegt, die in dem den Schmiermittelfilm bildenden Schmiermittel 2 enthaltenen speziellen Additive 19 zur Fluoreszenz 21 an. Während die speziellen Additive 19 dabei elektromagnetische Strahlungen 21 erzeugen, die Wellenlängen aufweisen, die innerhalb eines zweiten Wellenlängenbereichs liegen, werden diejenigen Strahlungsanteile 20, die den Schmiermittelfilm durchdringen an der Oberfläche 8,8',8" des Bandes 3 mit unveränderter Wellenlänge reflektiert. Da der wenigstens eine, zur Detektion wenigstens eines physikalischen und/oder chemischen Phänomens des, vorzugsweise organischen, Schmiermittels 2 ausgebildete Sensor 7 ausschließlich die Intensität von elektromagnetischen Strahlungen detektiert, die Wellenlängen aufweisen, die im zweiten Wellenlängenbereich angesiedelt sind, verfälschen die reflektierten Erregerstrahlen 20 das Messergebnis nicht. Dazu umfasst der Sensor einen Filter 22.

Der erste Wellenlängenbereich umfasst Wellenlängen zwischen 329 nm und 416 nm, insbesondere im Bereich von 342 nm bis 411 nm, ganz insbesondere von 364 nm bis 407 nm. Der zweite Wellenlängenbereich umfasst Wellenlängen zwischen 417 nm und 576 nm, insbesondere im Bereich von 419 nm bis 547 nm, ganz insbesondere von 420 nm bis 520 nm.

Aus Fig. 1 ist weiter erkennbar, dass die Erregereinrichtung 10 eine Steuereinheit 11 umfasst beziehungsweise mit einer Steuereinheit 11 in Wirkverbindung steht. Dabei ist die Steuereinheit 11 derart ausgebildet, dass sie die Erregereinrichtung 10 zur kontinuierlichen oder zur niedriggepulsten Ausstrahlung von elektromagnetischen Wellen ansteuert. Die Erregereinrichtung 10 und/oder die Steuereinrichtung 11 sind hierbei zur Ausstrahlung elektromagnetischer Strahlung 20 mit einer Wellenlänge oder einem Wellenlängenspektrum, das ausschließlich innerhalb des ersten Wellenlängenbereichs liegt, ausgebildet. Dabei ist die Erregereinrichtung 10 ferner zur Ausstrahlung einer gerichteten elektromagnetischen Strahlung, insbesondere zur Ausstrahlung von Licht, ausgebildet und umfasst dazu einen continuous-wave-Laser 12 oder einen quasi-continuous-wave-Laser 12'.

Um die von dem wenigstens einen Sensor 7 erfassten Daten besonders effektiv zur Überwachung und/oder zur Verbesserung des Schmierzustandes des Bandes 3 zum Transport von Pressgut 4 nutzen zu können weist die Vorrichtung 1 ferner eine Schnittstelle 13 zur Kommunikation mit einer Pressensteuerungs- und/oder -regelungseinheit 14 auf. Dabei umfasst die Schnittstelle 13 wenigstens einen der wenigstens einen Sensoren 7 und/oder die Auswerteeinheit 9 und/oder die Eingangsschnittstelle 6 und/oder die Steuereinheit 11 oder steht mit wenigstens einem der Partner in Wirkverbindung. Die Schnittstelle 13 und/oder die Pressensteuerungs- und/oder -regelungseinheit 14 ist zusätzlich zur Kommunikation mit einer Analyseeinheit 15 zur Ermittlung von Umgebungsstrahlung mit Wellenlängen innerhalb des zweiten Wellenlängenbereichs ausgebildet, dies kann beispielsweise auch der Überprüfung der Messergebnisse dienen.

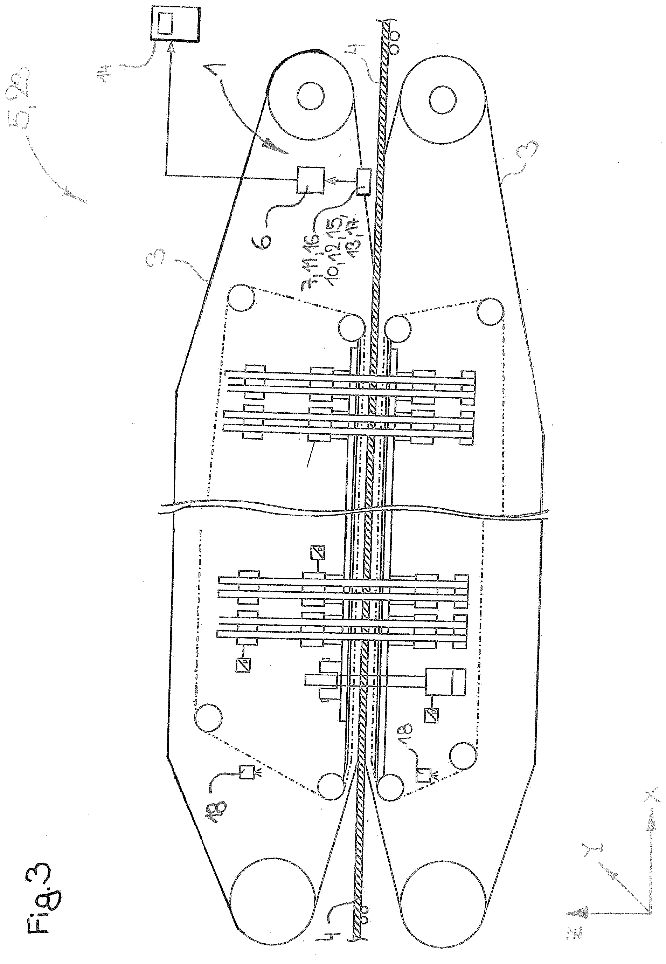

In Figur 3 ist eine kontinuierlich betreibbare Presse 5 zur Herstellung von Werkstoffplatten, wobei die Presse 5) eine Vorrichtung 1 zur Überwachung eines, durch ein, vorzugsweise organisches, Schmiermittel 2 beeinflussbaren Schmierzustandes eines umlaufenden anorganischen Bandes 3, welches zum Transport von Pressgut 4 und zur Übertragung eines Pressdrucks auf das Pressgut 4 ausgebildet ist, umfasst, wobei die Vorrichtung 1 eine Eingangsschnittstelle 6 aufweist, die zum wenigstens mittelbaren Empfangen wenigstens eines Signals von einem Sensor 7 ausgebildet ist, wobei der Sensor 7 zum Messen eines physikalischen und/oder eines chemischen Phänomens ausgebildet ist, das wenigstens mittelbar mit einem Schmiermittelzustand an einer Oberfläche 8, 8',8" des Bandes 3 zusammenhängt und die Vorrichtung 1 weiter eine Auswerteeinheit 9 zum Ermitteln eines Schmierparameters als Kenngröße für einen Schmiermittelzustand an der Oberfläche 8, 8', 8" des Bandes 3 basierend auf dem wenigstens einen Signal des Sensors 7 umfasst, dargestellt, wobei die Vorrichtung 1 eine Erregereinrichtung 10 aufweist, die zur Einflussnahme auf das wenigstens eine, durch den Sensor 7 zu detektierende, physikalische und/oder chemische Phänomen des Schmiermittels 2 ausgebildet ist. Die kontinuierlich betreibbare Presse 5 umfasst ferner eine steuerbare und/oder regelbare Auftragseinheit 18 zum vorzugsweise über die Breite Y des Bandes 3 abschnittsweise dosierbaren Auftragen von, vorzugsweise organischem, Schmiermittel 2 und die Auftragseinheit 18 in Abhängigkeit von dem durch den Sensor 7 zu detektierenden, physikalischen und/oder chemischen Phänomen des Schmiermittels 2 steuerbar und/oder regelbar ist.

Die in den Fig. 1 und 2 näher beschriebene Vorrichtung 1 zur Überwachung eines, durch ein Schmiermittel 2) beeinflussbaren Schmierzustandes des umlaufenden Bandes 3 zum Transport von Pressgut 4 und zur Übertragung eines Pressdrucks auf das Pressgut 4 innerhalb der kontinuierlich betreibbaren Presse 5 zur Herstellung von zunächst bahnwarenförmigen Werkstoffplatten ist dabei über die, in Y-Richtung verlaufende, Arbeitsbreite der dargestellten Presse 5 winklig zur Laufbahn (Pfeilrichtung) der von ihr produzierten Bahnware (bahnwarenförmige Werkstoffplatte) bewegbar und umfasst eine Konditionierungseinrichtung 17, insbesondere zur Kühlung der Erregereinrichtung 10.

## Patentansprüche

1. Kontinuierlich betreibbare Presse zur Herstellung von Werkstoffplatten, wobei die Presse (5) eine Vorrichtung (1) zur Überwachung eines, durch ein Schmiermittel (2) beeinflussbaren Schmierzustandes eines umlaufenden Bandes (3), welches zum Transport von Pressgut (4) und zur Übertragung eines Pressdrucks auf das Pressgut (4) ausgebildet ist, umfasst, wobei die Vorrichtung (1) einen Sensor (7) und eine Eingangsschnittstelle (6) aufweist, die zum wenigstens mittelbaren Empfangen wenigstens eines Signals von dem Sensor (7) ausgebildet ist, wobei der Sensor (7) zum Messen eines physikalischen und/oder eines chemischen Phänomens ausgebildet ist, das wenigstens mittelbar mit einem Schmiermittelzustand an einer Oberfläche (8) des Bandes (3) zusammenhängt und die Vorrichtung (1) weiter eine Auswerteeinheit (9) zum Ermitteln eines Schmierparameters als Kenngröße für einen Schmiermittelzustand an der Oberfläche (8) des Bandes (3) basierend auf dem wenigstens einen Signal des Sensors (7) umfasst, wobei die Vorrichtung (1) eine Erregereinrichtung (10) aufweist, die zur Einflussnahme auf das wenigstens eine, durch den Sensor (7) zu detektierende, physikalische und/oder chemische Phänomen des Schmiermittels (2) ausgebildet ist,
wobei die Erregereinrichtung (10) zur Ausstrahlung einer elektromagnetischen Strahlung mit einer Wellenlänge oder einem Wellenlängenspektrum, das innerhalb eines ersten Wellenlängenbereichs liegt, ausgebildet ist,
wobei die Vorrichtung (1) eine Schnittstelle (13) zur Kommunikation mit einer Pressensteuerungs- und/oder -regelungseinheit (14) umfasst,
**dadurch gekennzeichnet, dass**
der erste Wellenlängenbereich außerhalb eines zweiten, von dem wenigstens einen Sensor (7) und/oder der Eingangsschnittstelle (6) detektierbaren, Wellenlängenbereichs liegt, wobei der erste Wellenlängenbereich Wellenlängen zwischen 329 nm und 416 nm umfasst und der zweite Wellenlängenbereich Wellenlängen zwischen 417 nm und 576 nm umfasst,
wobei die Schnittstelle (13) und/oder die Pressensteuerungs- und/oder -regelungseinheit (14) zur Kommunikation mit einer Analyseeinheit (15) zur Ermittlung von Umgebungsstrahlung mit Wellenlängen innerhalb des zweiten Wellenlängenbereichs ausgebildet ist,
und wobei die Schnittstelle (13) den Anteil der aus der Umgebung stammenden Strahlunger mit Wellenlängen innerhalb des zweiten Wellenlängenbereichs aus der Gesamtmenge der ermittelten Strahlen zu subtrahieren ausgebildet ist.

2. Presse (5) nach Anspruch 1, **dadurch gekennzeichnet, dass** die Erregereinrichtung (10) eine Steuereinheit (11) umfasst oder mit einer Steuereinheit (11) in Wirkverbindung steht.

3. Presse (5) nach Anspruch 2, **dadurch gekennzeichnet, dass** die Steuereinheit (11) dazu ausgebildet ist, die Erregereinrichtung (10) zur kontinuierlichen Ausstrahlung von elektromagnetischen Wellenanzusteuern.

4. Presse (5) nach einem der Ansprüche 1 bis 3, **dadurch gekennzeichnet, dass** die Erregereinrichtung (10) und/oder die Steuereinheit (11) zur Ausstrahlung elektromagnetischer Strahlung mit einer Wellenlänge oder einem Wellenlängenspektrum, das ausschließlich innerhalb des ersten Wellenlängenbereichs liegt, ausgebildet ist.

5. Presse (5) nach einem der vorhergehenden Ansprüche, **dadurch gekennzeichnet, dass** die Erregereinrichtung (10) zur Ausstrahlung einer gerichteten elektromagnetischen Strahlung, insbesondere Lichts, ausgebildet ist.

6. Presse (5) nach einem der vorhergehenden Ansprüche, **dadurch gekennzeichnet, dass** die Erregereinrichtung (10) einen Laser, insbesondere einen continuous-wave-Laser (12), oder eine UV-Lichtquelle, insbesondere eine UV-Lampe, umfasst.

7. Presse (5) nach einem der Ansprüche 1 bis 6, **dadurch gekennzeichnet, dass** die Erregereinrichtung (10) einen quasi-continuous-wave-Laser (12') umfasst.

8. Presse (5) nach einem der Ansprüche 1 bis 7, **dadurch gekennzeichnet, dass** der erste Wellenlängenbereich Wellenlängen im Bereich von 342 nm bis 411 nm, insbesondere von 364 nm bis 407 nm umfasst.

9. Presse (5) nach einem der Ansprüche 1 bis 8, **dadurch gekennzeichnet, dass** der zweite Wellenlängenbereich Wellenlängen im Bereich von 419 nm bis 547 nm, insbesondere von 420 nm bis 520 nm umfasst.

10. Presse (5) nach einem der Ansprüche 1 bis 9, **dadurch gekennzeichnet, dass** die Schnittstelle (13) wenigstens einen der wenigstens einen Sensoren (7) und/oder die Auswerteeinheit (9) und/oder die Eingangsschnittstelle (6) und/oder die Steuereinheit (11) umfasst.

11. Presse (5) nach einem der vorhergehenden Ansprüche, **dadurch gekennzeichnet, dass** die Vorrichtung (1) eine Traverse (16) umfasst, entlang der die Erregereinrichtung (10) winklig gegenüber dem Band (3) bewegbar ist.

12. Presse (5) nach einem der vorhergehenden Ansprüche, **dadurch gekennzeichnet, dass** die Vorrichtung (1) eine Konditionierungseinrichtung (17), insbesondere zur Kühlung der Erregereinrichtung (10), umfasst.

13. Presse (5) nach einem der Ansprüche 1 bis 12, **dadurch gekennzeichnet, dass** die Presse (5) eine steuerbare und/oder regelbare Auftragseinheit (18) zum vorzugsweise über die Breite (Y-Richtung) des Bandes (3) abschnittsweise dosierbaren Auftragen von Schmiermittel (2) umfasst und die Auftragseinheit (18) in Abhängigkeit von dem durch den Sensor (7) zu detektierenden, physikalischen und/oder chemischen Phänomen des Schmiermittels (2) steuerbar und/oder regelbar ist.

14. Verfahren zur Überwachung eines, durch ein Schmiermittel (2) beeinflussbaren Schmierzustandes eines umlaufenden Bandes (3), welches zum Transport von Pressgut (4) und zur Übertragung eines Pressdrucks auf das Pressgut (4) in einer kontinuierlich betreibbaren Presse (5) zur Herstellung von Werkstoffplatten ausgebildet ist, wobei eine Eingangsschnittstelle (6) wenigstens mittelbar wenigstens ein Signal von einem Sensor (7) empfängt, das auf einem von dem Sensor (7) gemessenen physikalischen und/oder chemischen Phänomen, das wenigstens mittelbar mit einem Schmiermittelzustand an einer Oberfläche (8) des Bandes (3) zusammenhängt, basiert und in einer Auswerteeinheit (9) ein Schmierparameter als Kenngröße für einen Schmiermittelzustand an der Oberfläche (8) des Bandes (3) basierend auf dem wenigstens einen Signal des Sensors (7) ermittelt wird, wobei mittels einer Erregereinrichtung (10) auf das wenigstens eine, durch den Sensor (7) zu detektierende, physikalische und/oder chemische Phänomen des Schmiermittels (2) Einfluss genommen wird,
**dadurch gekennzeichnet, dass** zur Durchführung des Verfahrens eine kontinuierlich betreibbare Presse (5) gemäß einem der Ansprüche 1 bis 13 verwendet wird.

## Claims

1. Continuously operable press for manufacturing material boards, wherein the press (5) comprises a device (1) for monitoring a lubricant status of a circulating belt (3) that can be influenced by a lubricant (2) and is designed for transporting press material (4) and for transmitting a pressing pressure onto the press material (4), wherein the device (1) has a sensor (7) and an input interface (6) which is designed to at least indirectly receive a signal from the sensor (7), wherein the sensor (7) is configured to measure a physical and/or a chemical phenomenon that is at least indirectly connected to a lubricant status on a surface (8) of the belt (3), and the device (1) also comprises an evaluation unit (9) for determining a lubrication parameter as a characteristic for a lubrication status on the surface (8) of the belt (3) based on the at least one signal of the sensor (7), wherein the device (1) comprises an excitation device (10) that is designed to influence the at least one physical and/or chemical phenomenon of the lubricant (2) to be detected by the sensor (7),
wherein the excitation device (10) is designed to emit electromagnetic radiation within a first wavelength range, wherein the device (1) comprises an interface (13) for communication with a press control and/or regulation unit (14),
**characterised in that**
the first wavelength range is outside a second wavelength range detectable by the at least one sensor (7) and/or the input interface (6), wherein the first wavelength range comprises wavelengths between 329 nm and 416 nm and the second wavelength range comprises wavelengths between 417 nm and 576 nm,
wherein the interface (13) and/or the press control and/or regulation unit (14) is designed for communication with an analysis unit (15) for determining ambient radiation with wavelengths within the second wavelength range,
and wherein the interface (13) is designed to subtract the radiation originating from the environment with wavelengths within the second wavelength range from the total amount of determined radiation.

2. Press (5) according to claim 1, **characterised in that** the excitation unit (10) comprises a control unit (11) or is in effective connection with a control unit (11).

3. Press (5) according to claim 2, **characterised in that** the control unit (11) is designed to control the excitation device (10) for the continuous emission of electromagnetic waves.

4. Press (5) according to any one of claims 1 to 3, **characterised in that** the excitation device (10) and/or the control unit (11) are designed to emit electromagnetic radiation with a wavelength or a wavelength spectrum that is exclusively within the first wavelength range.

5. Press (5) according to any one of the preceding claims, **characterised in that** the excitation device (10) is designed to emit directed electromagnetic radiation, more particularly light.

6. Press (5) according to any one of the preceding claims, **characterised in that** the excitation unit (10) comprises a laser, more particularly a continuous-wave laser (12) or a UV light source, more particularly a UV lamp.

7. Press (5) according to any one of claims 1 to 6, **characterised in that** the excitation device (10) comprises a quasi-continuous-wave laser (12').

8. Press (5) according to any one of claims 1 to 7, **characterised in that** the first wavelength range comprises wavelengths in the range of 342 nm to 411 nm, more particularly from 364 nm to 407 nm.

9. Press (5) according to any one of claims 1 to 8, **characterised in that** the second wavelength range comprises wavelengths in the range of 419 nm to 547 nm, more particularly from 420 nm to 520 nm.

10. Press (5) according to any one of claims 1 to 9, **characterised in that** the interface (13) comprises at least one of the least one sensor (7) and/or the evaluation unit (9) and/or the input interface (6) and/or the control unit (11).

11. Press (5) according to any one of the preceding claims, **characterised in that** the device (1) comprises a crossbeam (16) along which the excitation device (10) is moveable at an angle in relation to the belt (3).

12. Press (5) according to any one of the preceding claims, **characterised in that** the device (1) comprises a conditioning device (17), more particularly for cooling the excitation device (10).

13. Press (5) according to any one of claims 1 to 12, **characterised in that** the press (5) comprises a controllable and/or regulable application unit (18) for the dosable application of lubricant, preferably over the width (Y-direction) of the belt (3) in sections, and the application unit (18) is controllable and/or regulable as a function of the physical and/or chemical phenomenon of the lubricant (2) to be detected by the sensor (7).

14. Method of monitoring a lubrication status of circulating belt (3) that can be influenced by a lubricant (2), that is designed for the transporting of press material (4) and transmission of a pressing pressure on the press material (4) in a continuously operating press (5) for the manufacturing of composite material boards, wherein an input interface (6) at least indirectly receives at least one signal from a sensor (7) that is based on a physical and/or chemical phenomenon measured by the sensor (7) that is at least indirectly connected to a lubricant status on a surface (8) of the belt (3), and in an evaluation unit (9), a lubrication parameter is determined as a characteristic for a lubrication status on the surface (8) of the belt (3) based on the at least one signal of the sensor (7), wherein by means of an excitation device (10) the at least one physical and/or chemical phenomenon of the lubricant (2) to be detected by the sensor (7) can be influenced,
**characterised in that** to implement the method a continuously operable press (5) according to any one of claims 1 to 13 is used.

## Revendications

1. Presse fonctionnant en continu destinée à la fabrication de panneaux de matières, sachant que la presse (5) comprend un dispositif (1) de contrôle d'un état de lubrification influençable par un lubrifiant (2) d'une bande (3) en circulation, laquelle est constituée pour le transport de matériau à presser (4) et pour la transmission d'une pression de pressage au matériau à presser (4), sachant que le dispositif (1) comporte un capteur (7) et une interface d'entrée (6), qui est constituée pour la réception au moins indirecte d'au moins un signal du capteur (7), sachant que le capteur (7) est constitué pour la mesure d'un phénomène physique et/ou chimique, qui est lié au moins indirectement à un niveau de lubrifiant sur une surface (8) de la bande (3) et le dispositif (1) comporte en plus une unité d'évaluation (9) pour déterminer un paramètre de lubrification sous la forme d'une grandeur caractéristique pour un niveau de lubrifiant sur la surface (8) de la bande (3) en se basant sur au moins un signal du capteur (7), sachant que le dispositif (1) comporte un système d'excitation (10), qui est constitué pour la répercussion sur au moins un phénomène physique et/ou chimique du lubrifiant (2) à détecter par le capteur (7),
sachant que le système d'excitation (10) est constitué pour la diffusion d'un rayonnement électromagnétique avec une longueur d'onde ou un spectre de longueurs d'ondes, qui se situe à l'intérieur d'une première gamme de longueurs d'ondes, sachant que le dispositif (1) comprend une interface (13) de communication avec une unité de commande et/ou de régulation de presse (14),
**caractérisée en ce que**
la première gamme de longueurs d'ondes se situe en dehors d'une deuxième gamme de longueurs d'ondes détectable par au moins un capteur (7) et/ou l'interface (6), sachant que la première gamme de longueurs d'ondes comprend des longueurs d'ondes se situant entre 329 nm et 416 nm et la deuxième gamme de longueurs d'ondes comprend des longueurs d'ondes se situant entre 417 nm et 576 nm,
sachant que l'interface (13) et/ou l'unité de commande et/ou de régulation de presse (14) pour la communication avec une unité d'analyse (15) est constituée pour déterminer un rayonnement ambiant avec des longueurs d'ondes à l'intérieur de la deuxième plage de longueurs d'ondes
et sachant que l'interface (13) est constituée pour soustraire de la quantité totale des faisceaux déterminés la partie des rayonnements provenant de l'environnement avec des longueurs d'ondes à l'intérieur de la deuxième gamme de longueurs d'ondes.

2. Presse (5) selon la revendication 1, **caractérisée en ce que** le système d'excitation (10) comprend une unité de commande (11) ou est en liaison fonctionnelle avec une unité de commande (11).

3. Presse (5) selon la revendication 2, **caractérisée en ce que** l'unité de commande (11) est constituée pour piloter le système d'excitation (10) pour la diffusion continue des ondes électromagnétiques.

4. Presse (5) selon l'une quelconque des revendications 1 à 3, **caractérisée en ce que** le système d'excitation (10) et/ou l'unité de commande (11) sont constitués pour diffuser un rayonnement électromagnétique avec une longueur d'onde ou un spectre de longueurs d'ondes, qui se situe exclusivement à l'intérieur de la première gamme de longueurs d'ondes.

5. Presse (5) selon l'une quelconque des revendications précédentes, **caractérisée en ce que** le système d'excitation (10) est constitué pour diffuser un rayonnement électromagnétique dirigé, en particulier de la lumière.

6. Presse (5) selon l'une quelconque des revendications précédentes, **caractérisée en ce que** le système d'excitation (10) comprend un laser, en particulier un laser à onde continue (12) ou une source lumineuse à UV, en particulier une lampe UV.

7. Presse (5) selon l'une quelconque des revendications 1 à 6, **caractérisée en ce que** le système d'excitation (10) comprend un laser à onde quasi continue (12').

8. Presse (5) selon l'une quelconque des revendications 1 à 7, **caractérisée en ce que** la première gamme de longueurs d'ondes comprend des longueurs d'ondes se situant dans la gamme de 342 nm à 411 nm, en particulier de 364 nm à 407 nm.

9. Presse (5) selon l'une quelconque des revendications 1 à 8, **caractérisée en ce que** la deuxième gamme de longueurs d'ondes comprend des longueurs d'ondes se situant dans la gamme de 419 nm à 547 nm, en particulier de 420 nm à 520 nm.

10. Presse (5) selon l'une quelconque des revendications 1 à 9, **caractérisée en ce que** l'interface (13) comprend au moins un des capteurs (7) et/ou l'unité d'évaluation (9) et/ou l'interface d'entrée (6) et/ou l'unité de commande (11).

11. Presse (5) selon l'une quelconque des revendications précédentes, **caractérisée en ce que** le dispositif (1) comprend une traverse (16) le long de laquelle le système d'excitation (10) peut être déplacé de façon angulaire par rapport à la bande (3).

12. Presse (5) selon l'une quelconque des revendications précédentes, **caractérisée en ce que** le dispositif (1) comprend un système de conditionnement (17), en particulier de refroidissement du système d'excitation (10) .

13. Presse (5) selon l'une quelconque des revendications 1 à 12, **caractérisée en ce que** la presse (5) comprend une unité d'application (18) pouvant être commandée et/ou régulée pour l'application de lubrifiant (2) dosable par endroits de préférence sur la largeur (direction Y) de la bande (3) et l'unité d'application (18) peut être commandée et/ou régulée en fonction du phénomène physique et/ou chimique du lubrifiant (2) à détecter par le capteur (7).

14. Procédé de contrôle d'un état de lubrification influençable par un lubrifiant (2) d'une bande en circulation (3), laquelle est constituée pour le transport d'un matériau à presser (4) et pour la transmission d'une pression de pressage au matériau à presser (4) dans une presse (5) fonctionnant en continu pour la fabrication de panneaux de matières, sachant qu'une interface d'entrée (6) reçoit au moins indirectement au moins un signal d'un capteur (7), qui est basé sur un phénomène physique et/ou chimique mesuré par le capteur (7), qui est lié au moins indirectement à un niveau de lubrifiant sur une surface (8) de la bande (3) et un paramètre de lubrification est déterminé dans une unité d'évaluation (9) sous la forme d'une valeur caractéristique pour un niveau de lubrifiant sur la surface (8) de la bande (3) en se basant sur au moins un signal du capteur (7), sachant qu'au moyen d'un système d'excitation (10) un effet est exercé sur au moins un phénomène physique et/ou chimique du lubrifiant (2) à détecter par le capteur (7),
**caractérisé en ce qu'**une presse fonctionnant en continu (5) est utilisée pour exécuter le procédé selon l'une quelconques des revendications 1 à 13.
